# EUROPÄISCHE PATENTSCHRIFT

(11) **EP 2 999 586 B1**
(45) Veröffentlichungstag und Bekanntmachung des Hinweises auf die Patenterteilung: **20.12.2017**
(21) Anmeldenummer: 14771551.0
(22) Anmeldetag: 18.09.2014
(51) Int. Cl.: B30B 11/02, B30B 15/06

(54) **VORRICHTUNG UND VERFAHREN ZUR HERSTELLUNG VON REIB- UND BREMSBELÄGEN**
DEVICE AND METHOD FOR PRODUCING FRICTION AND BRAKE LININGS
DISPOSITIF ET PROCÉDÉ DE FABRICATION DE GARNITURES DE FREIN ET DE FRICTION

(30) Priorität: 24.09.2013 DE 102013110530
(43) Veröffentlichungstag der Anmeldung: 30.03.2016
(73) Patentinhaber: TMD Friction Services GmbH, 51381 Leverkusen (DE)
(72) Erfinder: DOHLE, Achim, 51375 Leverkusen (DE); LESCH, Sabrina, 40668 Meerbusch (DE)
(74) Vertreter: Müller, Eckhard
(86) Internationale Anmeldenummer: PCT/EP2014/069881
(87) Internationale Veröffentlichungsnummer: WO 2015/044023

(56) Entgegenhaltungen:
- EP-A1- 0 386 652
- EP-A1- 2 684 695
- DE-A1- 1 965 168
- DE-A1- 2 445 574
- DE-A1-102010 031 421
- US-A- 3 754 499
- US-A- 3 795 473
- US-A- 5 073 099
- US-A1- 2006 272 762

## Beschreibung

Die vorliegende Erfindung betrifft eine Vorrichtung und ein Verfahren zur Herstellung von Reib- und Bremsbelägen.

Bremsbeläge, welche eine Trägerplatte (Reibbelagträger) und einen darauf befindlichen Reibbelag aufweisen, finden in den verschiedensten Bereichen, vor allem aber in der KFZ-Industrie und hier insbesondere für LKW und PKW, Verwendung und werden daher in entsprechend großer Stückzahl gefertigt. Dabei kommen die verschiedensten Typen von Trägerplatten und Reibbelägen zum Einsatz, die sich hinsichtlich ihrer Größe, Form, Dicke und verwendetem Material sehr deutlich unterscheiden, da nahezu jeder Fahrzeugtyp unterschiedliche Bremsbeläge aufweist.

Die Trägerplatte ist in der Regel ein Metall-, Blech- oder Gussteil. Der Reibbelag wird aus körnigem, faserigem und/oder granulatförmigem, formbaren Pressgut hergestellt. Übliche Belagmassen enthalten Metalle, Füllstoffe, Gleit- und Schmiermittel und organische Bestandteile, wie z.B. Harze, Kautschuk, organische Fasern und organische Füllstoffe. Die Belagzusammensetzungen werden hinsichtlich der verschiedenen Konstruktions- und Betriebsparameter und des gewünschten Reibwertes angepasst. Die verwendeten Kunstharze oder Phenolharze dienen als Bindemittel zur Verfestigung und Vernetzung der Reibbelagmischung beim Pressvorgang und/oder beim späteren Härten des Reibbelages.

Die Herstellung der Reib- und Bremsbeläge erfolgt grundsätzlich nach den folgenden Verfahren:
a) Eine definierte Menge der zu verpressenden Reibbelagmischung wird in die Pressform gefüllt und die Trägerplatte wird auf die Pressform aufgelegt. Dann wird die Presse geschlossen, d.h. eine beheizte Metallplatte, im Folgenden Spiegelplatte genannt, wird auf die Trägerplatte aufgesetzt, in der Form, dass zwischen Spiegelplatte und beheiztem Pressstempel der erforderliche Pressdruck aufgebaut werden kann. Danach wird die Masse mit Hilfe eines Pressstempels oder Kolbens unter Einwirkung von erhöhtem Druck und erhöhter Temperatur mit der Trägerplatte verpresst. Dabei können die Trägerplatten eine spezielle Oberflächenbeschaffenheit aufweisen, was eine noch bessere Verbindung zwischen der Trägerplatte und dem eigentlichen Reibbelag ermöglicht. Zusätzlich werden die Trägerplatten mit einem Spezialkleber oder einem sogenannten Bonding versehen, was ebenfalls eine feste Verbindung zwischen Trägerplatte und eigentlichem Reibbelag und damit einen mechanisch belastbaren und stabilen Bremsbelag sicherstellen soll.

Die verwendeten Bindemittel, meist Harze, schmelzen bei der erhöhten Temperatur des Pressvorgangs und verkleben und (chemisch) vernetzen die übrigen Bestandteile der Belagmischung zu einer homogen, festen und dichten Reibbelagmasse;
b) Zunächst wird ein sogenannter Vorpressling erzeugt. Dies erfolgt grundsätzlich wie unter a) beschrieben, allerdings wird auf die Pressform keine Trägerplatte aufgelegt. Die Reibmaterialmasse wird in der Pressform bzw. den Pressformen bei der Serienfertigung zwischen beheizter Spiegelplatte und beheiztem Presstempel verdichtet. Nach erfolgter Pressung wird der so erzeugte Vorpressling aus der Pressform entnommen und später in einem anschließenden oder zweiten Schritt auf den Belagträger (die Trägerplatte) verpresst. Die unter a) gemachten Angaben bzgl. Oberflächenbeschaffenheit der Trägerplatte und die Verwendung eines Bonding gelten für die Verpressung dieses Vorpresslings entsprechend.

Bei den oben beschriebenen Verfahrensvarianten werden die Pressform, der Stempel und die Spiegelplatte elektrisch beheizt. Bei der Variante a) befindet sich die in die Pressform eingelegte oder aufgelegte Trägerplatte z. B. in einer Aussparung eines Metallblocks, der ebenfalls über Heizmittel verfügt, wodurch diese Trägerplatte indirekt beheizt wird.

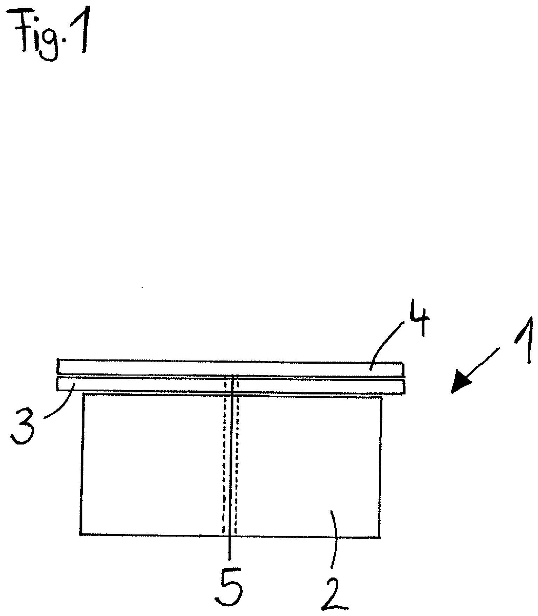

Die Verfahrensvariante a) wird z.B. in der DE 199 53 438 A1 detailliert beschrieben und insbesondere durch die Fig. 1 und 2 und die entsprechenden Erläuterungen in den Spalten 3 und 4 anschaulich dargestellt. Auf die Offenbarung dieser Offenlegungsschrift wird hier ausdrücklich Bezug genommen und deren Inhalt auch zum Bestandteil der hier vorliegenden Beschreibung gemacht.

Die genannte Offenlegungsschrift beschreibt eine Stempelplatte, die mehrschichtig aufgebaut ist. Auf der Pressseite der Stempelplatte befindet sich die übliche Druckplatte, die achsparallele Bohrungen aufweist und somit für Gase und Dämpfe durchlässig ist, die während des Pressvorgangs der Reibbelagmischung entstehen. Auf dieser Druckplatte befindet sich nach außen gerichtet und später in Kontakt mit der Reibbelagmischung eine Schicht aus porösem Material. Dieses Material hat enge Durchgangsporen, wodurch dampf- und gasförmige Substanzen zur Druckplattenseite hin durchtreten können. Die Poren sind andererseits so eng bemessen, dass selbst kleine Pressgutpartikel zurückgehalten werden.

Wie dargelegt, werden bei den Verfahren des Standes der Technik die Pressform, der Stempel, die Spiegelplatte und die in die Form eingelegte oder aufgelegte Trägerplatte direkt oder indirekt meist über Heizpatronen und/oder Heizbänder elektrisch beheizt. Dies hat den Nachteil, dass die Temperaturschwankung über die beheizte Fläche bis zu 40°C betragen kann. Da die genannten Teile des Presswerkzeugs aus Stahl bestehen, müssen große Mengen Metall aufgeheizt werden, um mit der gespeicherten Energie das Reibmaterial bzw. die Pressgutmischung vor und während des Pressvorgangs zu erwärmen. Dieses System ist einmal sehr träge, wobei 20 Sekunden Totzeit in der Regelung keine Seltenheit sind. Bedingt durch die Bauart der verwendeten Heizmittel, die Bauart bedingte Temperaturmessung und die Trägheit des Gesamtsystems bzgl. einer notwendigen Temperatursteuerung, ist z.B. eine konstante Temperatur über die Fläche des Stempels bzw. der Stempelplatte nicht zu gewährleisten.

Weiterhin arbeiten das beschriebene Pressverfahren und das Presswerkzeug nicht energieeffizient, da die Energie, die zur Aufheizung des Reibmaterials zur Verfügung steht, gering ist gegenüber dem Gesamtenergieverbrauch, der letztlich durch die Aufheizung des für die verschiedenen Teile des Presswerkzeugs verwendeten Stahls bestimmt wird.

Weiterhin wird in US 2006/272762 A1 ein Verfahren zur Herstellung von Reib- und Bremsbelägen beschrieben, bei dem zum möglichst schnellen Aushärten des Reibbelages der Bremsbelag zwischen zwei metallischen Heizplatten einer Druck- und Wärmebehandlung bei deutlich erhöhter Temperatur unterworfen wird.

US 5,073,099 bezieht sich auf eine Kombination von zwei Pressen zur Herstellung von Scheibenbremsbelägen. Dabei werden der obere und der untere Teil der Pressform über Heizplatten beheizt, die durch Isolierplatten gegenüber dem Druckkolben wärmeisoliert sind.

DE 10 2010 031 421 A1 betrifft eine Laminiervorrichtung und ein Verfahren zum Laminieren mehrlagiger Dokumente, wie zum Beispiel Kreditkarten oder Ausweise, bei den keramischen Heizplatten als Laminierplatten verwendet werden.

Der Erfindung liegt somit die Aufgabe zugrunde, ein Pressverfahren und eine Presswerkzeug oder eine Pressvorrichtung zur Verfügung zu stellen, welches bzw. welche die genannten Nachteile des Standes der Technik weitgehend vermeidet.

Diese Aufgabe wird durch ein Verfahren zur Herstellung von Reibbelägen gelöst, bei dem in einem Presswerkzeug, welches eine Pressform oder Form, einen Stempel, eine Spiegelplatte als Boden oder als Aufsatzfläche für eine oder mehrere Formen aufweist, eine Reibbelagmischung unter Ausformung eines Reibbelags verdichtet wird und welches dadurch gekennzeichnet ist, dass der Stempel und die Spiegelplatte des Presswerkzeugs durch eine Heizplatte beheizt werden, bzw. eine Heizplatte aufweisen.

Ein entsprechendes Presswerkzeug bzw. Pressvorrichtung ist ebenfalls Gegenstand der vorliegenden Erfindung.
Der Stempel und die Spiegelplatte werden jeweils durch eine, bevorzugt keramische, Heizplatte beheizt. Diese Heizplatte ist auf der Spiegelplatte und dem Stempel (genauer: der Stempelplatte) auf der Pressseite angebracht, wird elektrisch beheizt, und ist zum Metall der Spiegel- und Stempelplatte hin bevorzugt elektrisch und/oder wärmeisoliert. Die Isolierung erfolgt z. B. durch die keramische Heizplatte an sich oder durch eine zusätzliche keramische Zwischenplatte unter der keramischen Heizplatte in Druckrichtung. Die elektrischen Anschlüsse verlaufen bevorzugt achsparallel in die vom Pressling abgewandte Richtung analog zu den aktuell verbauten Heizsystemen. Die Heizplatte der Spiegelplatte und eine auf der Heizplatte des Stempels angebrachte Profilplatte stehen während des Pressvorgangs in direktem Kontakt mit dem zu verpressenden Reibmaterial.

Die Ausgestaltung der Heizflächen oder Heizplatten bzgl. ihrer mechanischen (Druck) und elektrischen Eigenschaften (Heizleistung, Oberflächentemperatur) kann an die herzustellenden Reibbeläge angepasst werden, die sich z.B. hinsichtlich der verwendeten Reibmaterialmischung und ihrer Dichte und damit hinsichtlich den zu ihrer Herstellung notwendigen Prozessparametern deutlich voneinander unterscheiden können.

Allgemein wird die Reibbelagmischung (das Pressgut) bei einer Temperatur von 70-200°C, vorzugsweise bei 80-140°C, verpresst. Der Pressvorgang kann in einem Takt von 50 bis 250s, vorzugsweise 70-140s, durchgeführt werden. Die Pressdrücke liegen in der Regel zwischen 15 N/mm² - 40 N/mm².

Bevorzugte Ausgestaltungen der erfindungsgemäßen Heizplatten und deren Anordnung sind nachfolgend wiedergegeben:
Die Dicke der erfindungsgemäßen Heizplatten liegt bevorzugt zwischen 3 mm und 10 mm. Ein mögliches Material für die erfindungsgemäßen Heizplatten ist z.B. Siliziumnitrid, es können jedoch auch alle anderen keramischen Heizkörper / Materialien eingesetzt werden. Die Heizleistung liegt bevorzugt zwischen 100 W und 10000 W. Die Heizplatten können erfindungsgemäß auch aus mehreren einzelnen keramischen Heizelementen zusammengesetzt sein. Druckfestigkeiten von ca. 2000 MPa und Elastizitätsmodule von ca. 300 GPa sowie eine extreme Standfestigkeit gegen mechanischen Verschleiß und eine praktisch vernachlässigbare Eigenverformung bis ca. 1000°C stellen weitere Vorteile der erfindungsgemäßen keramischen Heizelemente dar. Dazu kommen Oberflächenleistungen von bis zu ca. 150 W/cm², extrem kurze Aufheizzeiten, woraus eine schnelle und präzise Regelung ohne Totzeiten folgt, sowie geringe Nachwärme und eine geringe thermische Masse, welche wiederum das Regelverhalten positiv beeinflusst.

Die keramische Heizplatte auf der Pressseite des Stempels bzw. der Stempelplatte kann auch aus porösem Material bestehen, durch das beim Pressvorgang auftretende Gase und Dämpfe, aber keine Pressgutpartikel, hindurchtreten können, welche dann z.B. durch Öffnungen in der sich anschließenden Stempelplatte aus dem Presswerkzeug abgeleitet werden. Eine solche Anordnung ohne eine erfindungsgemäße Heizplatte ist z.B. in den Fig. 1 und 2 der DE 199 53 438 A1 beschrieben; vgl. dort die Spalten 3 und 4, insbesondere Spalte 3, Zeilen 15-40. Beim erfindungsgemäßen Presswerkzeug kann die Pressform selbst ebenfalls z.B. elektrisch beheizt werden. Dies kann vorteilhaft sein, ist aber nicht in allen Fällen notwendig.
Die Vorteile des erfindungsgemäßen Verfahrens und des dort eingesetzten erfindungsgemäßen Presswerkzeugs sind vielfältig:
Das System kann extrem schnell auf Temperaturschwankungen, wie sie z.B. durch das Einbringen der kalten Reibmassenmischung in das Presswerkzeug entstehen, reagieren und die gewünschte Prozesstemperatur sicherstellen (Optimierung der Temperaturkonstanz im Pressnest). Die Temperaturunterschiede über die beheizten Flächen sind minimal und betragen nur wenige Grad. Weiterhin kann der Pressprozess selbst verkürzt werden, da die Reibmasse schneller und gleichmäßiger auf die gewünschte Prozesstemperatur gebracht wird, wodurch gleichzeitig auch eine konstante Produktqualität gewährleistet und Fehlchargen vermieden werden. Diese Aspekte haben insbesondere für die industrielle Serienproduktion unter Kostengesichtspunkten große Bedeutung.
Fig. 1 zeigt eine mögliche Ausführung eines erfindungsgemäßen Pressstempels 1 mit einem Stempelfuß 2, auf dem sich eine (hier nicht dargestellte metallische) Stempel- oder Druckplatte befinden kann, einer Isolationsplatte 3, einer Heizplatte 4 mit elektrischem Anschluss 5.
Eine analoge Anordnung ist für die Spiegelplatte möglich. Hier ist der Stempelfuß durch die (metallische) Spiegelplatte ersetzt.

In der Ausgestaltung der Erfindung ist auf der separaten Heizplatte des Pressstempels eine sogenannte Profilplatte aufgebracht, die dann während des Pressvorgangs in direktem Kontakt mit dem Pressgut steht. Die Profilplatte befindet sich dann auf der dem Stempelfuß 2 abgewandten Oberfläche der Heizplatte 4 in Figur 1.

Die Profilplatte kann auf einfache Weise über die bevorzugte keramische Heizplatte mit dem Stempelfuß verbunden werden. Die Befestigung kann zum Beispiel durch das Einbringen von Löchern in die Heizplatte realisiert und die Profilplatte mit dem Stempelfuß verschraubt werden. Die Heizplatte wird dadurch zwischen dem Stempelfuß 2 beziehungsweise einer eventuell vorhandenen Isolationsplatte 3 und der Profilplatte eingespannt.

Die Befestigung einer Profilplatte auf der bevorzugten keramischen Heizplatte dient in erster Linie dazu, um, zum Beispiel über eine so erzeugte Vorspannung der Heizplatte, Biege- und Scherspannung an der Heizplatte während des Pressvorgangs zu vermeiden. Die mechanische Belastungen insbesondere einer keramischen Heizplatte, die auf dem Pressstempel angebracht ist, werden dadurch deutlich reduziert. Weiterhin kann zum Beispiel bei kleineren Geometrieänderungen der Pressform unter Umständen auf eine entsprechende Geometrieänderung der keramischen Heizplatte verzichtet werden, und es wird lediglich die Profilplatte, die keine elektrischen Anschlüsse zur Beheizung aufweist, entsprechend angepasst. Durch den erfindungsgemäßen Einsatz einer solchen Profilplatte können somit Kosten und Standzeiten einer Pressanlage zusätzlich minimiert werden.

Die erfindungsgemäße Profilplatte besteht aus einem für das beschriebene Presswerkzeug geeignete Material. Bevorzugt wird Stahl, insbesondere Stahl von hoher Härte, zum Beispiel in Form einer nitrierten Profilplatte, verwendet. Aufgrund der Verschleißbeständigkeit eines solchen Profilplattenstrahls kann die Einsatzzeit eines entsprechenden ausgerüsteten Presstempels deutlich erhöht werden.

Weiterhin kann zum Beispiel durch eine Verchromung, oder allgemeiner einer Oberflächenbehandlung, der Profilplatte bei einer geeigneten hohen Grundhärte des Stahls ein Anhaften des Pressguts an der Pressfläche weitgehend verhindert werden.

Die Dicke der Profilplatte liegt bevorzugt im Bereich der Dicke der Heizplatte, insbesondere weist die Profilplatte eine Dicke von 2 bis 10 mm auf.

In einer weiteren vorteilhaften Ausführungsform der vorliegenden Erfindung kann auch zusätzlich auf der bevorzugten keramischen Heizplatte, die sich auf der Spiegelplatte befindet, eine Profilplatte angebracht sein. Die vorangehende Ausführungsform bezüglich einer Profilplatte auf der Heizplatte des Pressstempels geltend entsprechend.

Der Einsatz von Profilplatten zur Abdeckung der (keramischen) Heizplatten auf dem Pressstempel und/oder der Spiegelplatte, wobei dann diese Profilplatte(n) während des Pressvorgangs in direktem Kontakt mit dem Pressgut stehen, erhöht die mechanische Standfestigkeit des Presswerkzeuges und damit dessen Einsatzzeiten. Die damit einhergehenden (geringeren) Einbußen bei den sonstigen Vorteilen von erfindungsgemäßen Presswerkzeug und Verfahren gegenüber einer Ausgestaltung der Erfindung, bei der die Heizplatte beim Pressvorgang in direktem Kontakt mit dem Pressgut stehen, sind gegenüber den beschriebenen, zusätzlichen Vorteilen beim Einsatz von Profilplatten abzuwägen. Durch eine geeignete Wahl von Heiz- und Profilplatten kann aber auch beim Einsatz von Profilplatten sichergestellt werden, dass das System erfindungsgemäß weiterhin zum Beispiel schnell auf Temperaturschwankungen reagiert, die Temperaturunterscheide über die indirekt beheizbare Fläche (Profilplatten) ausreichend gering sind, damit gegenüber dem Stand der Technik der Pressvorgang verkürzt werden kann, das Pressgut schneller und gleichmäßiger auf die gewünschte Prozesstemperatur gebracht und dadurch eine konstante Produktqualität gewährleistet wird.

Die erfindungsgemäßen Merkmale sind in jeder technisch sinnvollen Hinsicht und zur Förderung des erfindungsgemäßen Zwecks frei kombinierbar.

## Patentansprüche

1. Presswerkzeug zur Herstellung eines Reibbelags umfassend eine Pressform für ein Pressgut, einen Stempel und eine Spiegelplatte, wobei der Stempel (1) und die Spiegelplatte separate Heizplatten (4) aufweisen, wobei auf der Heizplatte (4) des Stempels (1) zusätzlich eine Profilplatte angebracht ist, so dass während des Pressvorgangs die Heizplatte (4) der Spiegelplatte und die auf der Heizplatte (4) des Stempels (1) angebrachte Profilplatte in Kontakt mit dem in die Pressform eingefüllten Pressgut stehen.

2. Presswerkzeug nach Anspruch 1, **dadurch gekennzeichnet, dass** die Heizplatten (4) gegenüber dem Stempel (1) und der Spiegelplatte wärme- und/oder elektrisch isoliert sind.

3. Presswerkzeug nach Anspruch 1 oder 2, **dadurch gekennzeichnet, dass** die Heizplatten (4) aus keramischem Material bestehen.

4. Presswerkzeug nach Anspruch 3, **dadurch gekennzeichnet, dass** als keramisches Material Siliziumnitrid verwendet wird.

5. Presswerkzeug nach einem der Ansprüche 1 bis 4, **dadurch gekennzeichnet, dass** die Heizplatten (4) eine Dicke zwischen 3 und 10 mm aufweisen.

6. Presswerkzeug nach einem der Ansprüche 1 bis 5, **dadurch gekennzeichnet, dass** die Heizplatten (4) Heizleistungen zwischen 100 und 10000 W aufweisen.

7. Presswerkzeug nach einem der Ansprüche 1 bis 6, **dadurch gekennzeichnet, dass** die Heizplatten (4) Oberflächenleistungen von bis zu 150 W/cm² aufweisen.

8. Presswerkzeug nach einem der Ansprüche 1 bis 7, **dadurch gekennzeichnet, dass** die Profilplatte aus Stahl besteht und eine Dicke von 2 bis 10 mm aufweist.

9. Presswerkzeug nach einem der Ansprüche 1 bis 8, **dadurch gekennzeichnet, dass** die Heizplatte (4) und die Profilplatte auf dem Stempel (1) gas- oder dampfdurchlässig sind.

10. Verfahren zur Herstellung von Reibbelägen, bei dem ein Pressgut in ein Presswerkzeug gefüllt wird, welches eine Pressform einen Stempel und eine Spiegelplatte aufweist, **dadurch gekennzeichnet, dass** ein Presswerkzeug gemäß einem der Ansprüche 1 bis 9 verwendet wird.

11. Verwendung eines Presswerkzeugs nach einem der Ansprüche 1 bis 9 zur Herstellung von Reibbelägen.

## Claims

1. Press tool for producing a friction lining, comprising a mold for a compressed material, a stamp and a reflecting plate, wherein the stamp (1) and the reflecting plate have separate heating plates (4), wherein a profile plate is additionally attached to the heating plate (4) of the stamp (1), so that during the pressing procedure the heating plate (4) of the reflecting plate and the profile plate that is attached to the heating plate (4) of the stamp (1) are in contact with the compressed material that is filled into the mold.

2. Press tool according to claim 1, **characterized in that** the heating plates (4) are thermally or electrically insulated with respect to the stamp (1) and the reflecting plate.

3. Press tool according to claim 1 or 2, **characterized in that** the heating plates (4) are made of a ceramic material.

4. Press tool according to claim 3, **characterized in that** silicon nitride is used as the ceramic material.

5. Press tool according to one of the claims 1 to 4, **characterized in that** the heating plates (4) have a thickness of between 3 and 10 mm.

6. Press tool according to one of the claims 1 to 5, **characterized in that** the heating plates (4) have heating capacities of between 100 and 10000 W.

7. Press tool according to one of the claims 1 to 6, **characterized in that** the heating plates (4) have a surface power of up to 150 W/cm².

8. Press tool according to one of the claims 1 to 7, **characterized in that** the profile plate is made of steel and has a thickness of 2 to 10 mm.

9. Press tool according to one of the claims 1 to 8, **characterized in that** the heating plate (4) and the profile plate on the stamp (1) are permeable to gas or vapor.

10. Method for producing friction linings, in which a compressed material is filled into a pressing tool that has a mold, a stamp and a reflecting plate, **characterized in that** a press tool according to one of the claims 1 to 9 is used.

11. Use of a pressing tool according to one of the claims 1 to 9 for producing friction linings.

## Revendications

1. Outil de presse pour la fabrication d'une garniture de friction, comprenant un moule de pressage pour un produit à presser, un poinçon et une plaque miroir, le poinçon (1) et la plaque miroir présentant des plaques de chauffage séparées (4), une plaque profilée étant en outre disposée sur la plaque de chauffage (4) du poinçon (1), de telle sorte que pendant l'opération de pressage, la plaque de chauffage (4) de la plaque miroir et la plaque profilée montée sur la plaque de chauffage (4) du poinçon (1) soient en contact avec le produit à presser introduit dans le moule de pressage.

2. Outil de presse selon la revendication 1, **caractérisé en ce que** les plaques de chauffage (4) sont isolées thermiquement et/ou électriquement par rapport au poinçon (1) et à la plaque miroir.

3. Outil de presse selon la revendication 1 ou 2, **caractérisé en ce que** les plaques de chauffage (4) se composent de matériau céramique.

4. Outil de presse selon la revendication 3, **caractérisé en ce que** l'on utilise en tant que matériau céramique du nitrure de silicium.

5. Outil de presse selon l'une quelconque des revendications 1 à 4, **caractérisé en ce que** les plaques de chauffage (4) présentent une épaisseur comprise entre 3 et 10 mm.

6. Outil de presse selon l'une quelconque des revendications 1 à 5, **caractérisé en ce que** les plaques de chauffage (4) présentent des puissances de chauffage comprises entre 100 et 10000 W.

7. Outil de presse selon l'une quelconque des revendications 1 à 6, **caractérisé en ce que** les plaques de chauffage (4) présentent des puissances superficielles allant jusqu'à 150 W/cm².

8. Outil de presse selon l'une quelconque des revendications 1 à 7, **caractérisé en ce que** la plaque profilée se compose d'acier et présente une épaisseur comprise entre 2 et 10 mm.

9. Outil de presse selon l'une quelconque des revendications 1 à 8, **caractérisé en ce que** la plaque de chauffage (4) et la plaque profilée sur le poinçon (1) sont perméables aux gaz ou à la vapeur.

10. Procédé de fabrication de garnitures de friction, dans lequel un produit à presser est introduit dans un outil de presse, qui présente un moule de pressage, un poinçon et une plaque miroir, **caractérisé en ce qu'**un outil de presse selon l'une quelconque des revendications 1 à 9 est utilisé.

11. Utilisation d'un outil de presse selon l'une quelconque des revendications 1 à 9 pour la fabrication de garnitures de friction.
